# FASCICULE DE BREVET EUROPEEN

(11) **EP 3 676 162 B1**
(45) Date de publication et mention de la délivrance du brevet: **05.10.2022**
(21) Numéro de dépôt: 18762302.0
(22) Date de dépôt: 31.08.2018
(51) Int. Cl.: B62D 35/00, B62D 37/02

(54) **DEPLOIEMENT D'UN ELEMENT AERODYNAMIQUE DE CARROSSERIE**
ENTFALTUNG EINES AERODYNAMISCHEN KAROSSERIEELEMENTS
DEPLOYMENT OF A BODYWORK AERODYNAMIC ELEMENT

(30) Priorité: 01.09.2017 FR 1758074
(43) Date de publication de la demande: 08.07.2020
(73) Titulaire: Compagnie Plastic Omnium, 69007 Lyon (FR)
(72) Inventeur: PARRA, Stéphane, 69120 Vaulx-En-Velin (FR)
(74) Mandataire: LLR
(86) Numéro de dépôt international: PCT/EP2018/073543
(87) Numéro de publication internationale: WO 2019/043199

(56) Documents cités:
- DE-A1-102004 013 754
- DE-A1-102010 020 548
- KR-A- 20150 129 254
- US-B1- 8 702 152

## Description

L'invention concerne les pièces de carrosserie automobile et plus particulièrement les pièces de carrosserie comprenant un élément aérodynamique mobile.

Certaines pièces de carrosserie comprennent une ou plusieurs parties aérodynamiques mobiles, c'est le cas par exemple des becquets (ou spoiler en anglais) ou encore de diffuseurs. Le becquet est une pièce de carrosserie formant une extension du toit positionnée sur l'arrière du véhicule, pouvant comprendre une lame aérodynamique mobile. Le diffuseur arrière est une pièce de carrosserie fixée au pare-chocs arrière et comprenant un panneau mobile. Un tel élément aérodynamique (lame ou panneau) permet, lorsqu'il est déployé, d'améliorer les performances aérodynamiques du véhicule en décalant vers l'arrière du véhicule les points de décollement de l'air par rapport au véhicule, c'est-à-dire les points au niveau desquels l'air ne suit plus la carrosserie.

Il existe de nombreux mécanismes de déploiement pour de tels éléments aérodynamiques de carrosserie par des cinématiques combinant des rotations et des translations. C'est notamment le cas d'une lame aérodynamique mobile déployée vers l'arrière du véhicule de manière rectiligne, le document FR2890638 décrivant un mécanisme actionné par un vérin et assurant un guidage de l'élément mobile par des rails fixés à la carrosserie.

Les documents US 8 702 152 B1 et DE 10 2004 013754 A1 divulguent tous deux une pièce de carrosserie comprenant un élément aérodynamique déployable selon le préambule de la revendication 1.

Cependant, l'utilisation d'un mécanisme à rails ou à glissières présente de nombreux inconvénients.

Tout d'abord, un mécanisme à glissières est un mécanisme relativement encombrant, notamment dans la direction de déploiement de l'élément mobile. En effet, la longueur minimale du mécanisme, correspondant à la position rétractée, occupe une place supérieure à la course de déploiement et ce d'autant plus si l'élément aérodynamique est déployé en porte-à-faux. En effet, il faut que la longueur de la glissière permette d'assurer la course de déploiement souhaitée tout en conservant un recouvrement entre les différentes branches de chaque glissière nécessaire pour assurer le guidage et la robustesse des différents en bras entre eux ainsi que le soutien de l'élément mobile et des efforts qui lui sont appliqués.

De plus, un mécanisme à glissières est particulièrement vulnérable. En effet, une exposition à l'eau ou à la boue conduit à une altération du mécanisme gênant son bon fonctionnement. Il est donc indispensable de prévoir des moyens de protection des glissières, ce qui conduit à un alourdissement du dispositif, à une augmentation des coûts de conception et de l'encombrement. De plus, une étanchéité parfaite n'est généralement pas assurée.

Enfin, le mécanisme à glissières est difficile à mettre en œuvre. Il est en effet nécessaire d'assurer un parallélisme parfait entre les glissières pour assurer le bon guidage du dispositif. Les déformations pouvant apparaître lors du montage du mécanisme ou lors de sa durée de vie peuvent alors gêner son bon fonctionnement à cause de la perte de parallélisme. Il est possible, afin d'éviter cette complexité de montage, de laisser un jeu de fonctionnement au niveau d'une des glissières. Cependant, ce jeu engendre des risques de vibrations et d'arc-boutement.

L'invention a pour but de remédier à ces inconvénients en fournissant une pièce de carrosserie comprenant un élément aérodynamique mobile déployable par l'intermédiaire d'un mécanisme plus robuste, moins encombrant et moins cher qu'un mécanisme à glissières.

A cet effet, l'invention a pour objet une pièce de carrosserie automobile comprenant :
- un corps principal, et
- un élément aérodynamique mobile apte à occuper une position rétractée et une position déployée par rapport au corps principal,
la pièce de carrosserie comprenant un mécanisme articulé apte à permettre un déploiement rectiligne de l'élément aérodynamique, le mécanisme articulé comprenant deux bras articulés comprenant chacun deux portions, une portion reliée au corps principal et une portion reliée à l'élément aérodynamique mobile, les bras articulés étant aptes à se déployer dans une direction parallèle à un axe longitudinal du véhicule.

Ainsi, on déploie de manière rectiligne l'élément aérodynamique mobile, par exemple la lame aérodynamique d'un becquet, par l'intermédiaire d'un mécanisme articulé pouvant avoir un encombrement très faible dans la direction longitudinale du véhicule. En effet, ces mécanismes ne comprennent que les liaisons sous forme d'articulations ce qui permet d'envisager une position rétractée dans laquelle les membres du mécanisme sont repliés par leurs articulations de façon à être proches les uns des autres et orientés selon une direction sensiblement perpendiculaire à la direction de déploiement.

De plus, un mécanisme ne comprenant que des articulations est plus robuste, plus simple à mettre en oeuvre et plus économique qu'un mécanisme à glissières. Il n'est par ailleurs pas nécessaire de prévoir un dispositif d'étanchéité spécifique.

La pièce de carrosserie selon l'invention peut en outre comprendre une ou plusieurs des caractéristiques suivantes :
- le mécanisme articulé comprend au moins un actionneur apte à permettre le déploiement et la rétraction des bras articulés ;
- le mécanisme articulé comprend un actionneur bloqué en rotation avec un des bras articulés ;
- le mécanisme articulé comprend des bielles aptes à permettre une synchronisation des mouvements des bras articulés ;
- une bielle est apte à relier directement les deux bras articulés entre eux
- un ensemble de trois bielles, partageant une articulation commune, est apte à relier les bras articulés à l'élément aérodynamique mobile ;
- les bielles sont reliées entre elles et/ou aux bras articulés par des liaisons rotule ;
- le mécanisme articulé comprend deux actionneurs, chaque actionneur étant relié à un bras articulé ou à une bielle ;
- l'actionneur est choisi parmi un moteur à sortie directe en couple et angle ou un vérin ;
- la pièce est un pare-chocs arrière et l'élément aérodynamique mobile est un diffuseur arrière ; et
- la pièce est un becquet de toit ou de hayon et l'élément aérodynamique mobile est une lame aérodynamique mobile.

L'invention a également pour objet un véhicule automobile comprenant une pièce de carrosserie selon l'invention.

Nous allons maintenant présenter des modes de réalisation de l'invention à l'appui des figures annexées, qui sont fournies à titre d'exemples et ne présentent aucun caractère limitatif, dans lesquelles :
- la figure 1 est une vue en perspective d'une portion de véhicule représentant une pièce de carrosserie, en l'occurrence un becquet, comprenant un mécanisme articulé selon un premier mode de réalisation de l'invention ;
- la figure 2 est une vue en perspective du mécanisme articulé seul de la figure 1 ;
- les figures 3A à 3C sont des vues de dessus du mécanisme articulé de la figure 1 selon un premier mode de réalisation de l'invention à trois stades de déploiement/rétraction différents, le mécanisme articulé comprenant des bielles et un actionneur relié sur une articulation du mécanisme articulé ;
- les figures 4 et 5 sont respectivement des vues en coupe selon IV-IV et V-V représentées à la figure 3C d'articulations présentes dans le mécanisme articulé des figures 1, 2, 3A à 3C ;
- les figures 6 et 7 représentent des variantes du mécanisme articulé selon le deuxième mode de réalisation de l'invention, le mécanisme articulé comprenant un actionneur de type vérin ;
- la figure 8 est une vue de dessous d'un mécanisme articulé selon un troisième mode de réalisation de l'invention, le mécanisme articulé comprenant deux actionneurs synchronisés ;
- la figure 9 est une vue en perspective d'une portion de véhicule représentant un diffuseur arrière comprenant un panneau mobile situé en partie basse du véhicule.

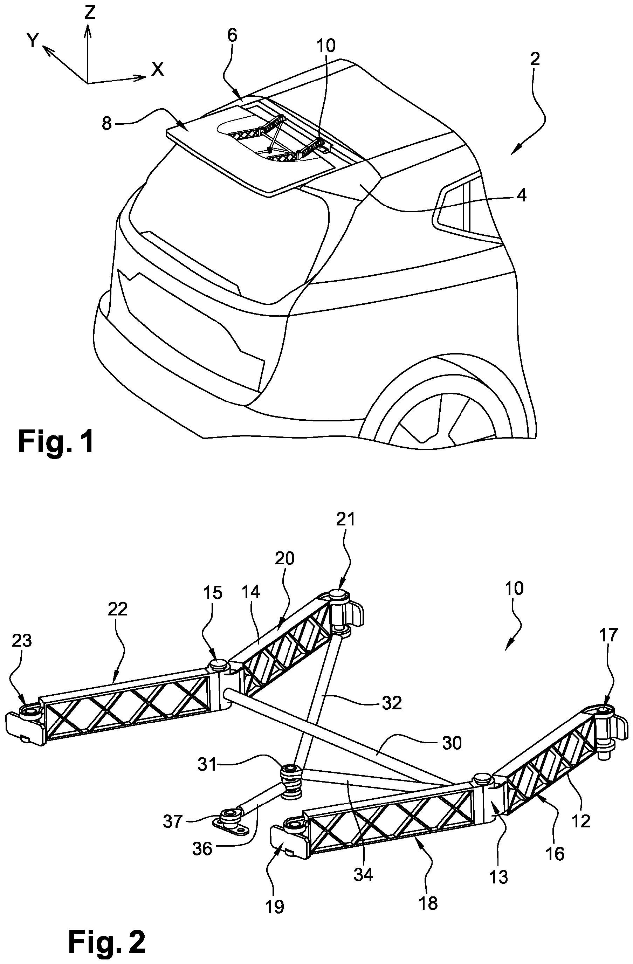

On se réfère désormais aux figures 1 à 5 qui représentent un premier mode de réalisation de l'invention. Par la suite, les termes d'orientation tels que « axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles selon le repère représenté sur la figure 1.

La figure 1 représente une portion arrière de véhicule 2 comprenant une pièce de carrosserie, ici un becquet 4 positionné sur l'arrière du véhicule 2. Le becquet est la partie du véhicule située en haut à l'arrière et dépassant, dans le prolongement du toit, au-dessus de la lunette. Dans l'exemple illustré et qui va être décrit par la suite, le becquet 4 comprend un corps principal 6 relié directement ou indirectement au véhicule (en fonction du fait qu'il s'agit d'un becquet dit « de toit » ou « de hayon ») et une partie mobile 8 nommée par la suite lame aérodynamique mobile 8.

Dans ce qui suit, nous allons décrire l'exemple d'un becquet. Bien évidemment, l'invention peut s'appliquer à toute pièce de carrosserie comprenant un élément mobile.

La lame aérodynamique mobile 8 est apte à se déplacer dans une direction parallèle à l'axe longitudinal X du véhicule 2 et ce afin d'améliorer les performances aérodynamiques du véhicule, comme cela est expliqué ci-dessus. Le déploiement et la rétraction de l'élément aérodynamique mobile s'effectue donc dans une direction parallèle à l'axe longitudinal X du véhicule automobile. La lame aérodynamique mobile 8 peut par exemple se déployer et se rétracter automatiquement en fonction de la vitesse du véhicule ou encore par l'intermédiaire de l'utilisateur du véhicule grâce à une commande spécifique. Le déploiement de la lame aérodynamique peut par exemple être effectué sur une longueur de 20 cm.

Comme observé sur la figure 1, le becquet 4 comprend également un mécanisme articulé 10 apte à guider la lame aérodynamique mobile 8 lors de son déploiement et de sa rétraction.

Le mécanisme articulé 10 est situé en-dessous de la lame aérodynamique mobile 8 et sur la figure 1 il est partiellement rendu visible par transparence.

On entend par mécanisme articulé un mécanisme composé de parties rigides reliées les unes aux autres par des articulations (par exemple des liaisons pivot ou encore de type rotule, c'est-à-dire des liaisons conférents au moins un degré de liberté en rotation aux parties reliées). Ces dits mécanismes articulés comprennent exclusivement des articulations. Ces systèmes ont fait l'objet de nombreuses études (Kempe, Watt, etc.), le mécanisme articulé étant constitué de tiges articulées et aptes à transformer des rotations relatives entre-elles en un déplacement selon une trajectoire plane. Un cas particulier de ces mécanismes articulés permet de générer un déplacement sur une trajectoire plane et rectiligne, permettant ainsi de mettre en mouvement une pièce rétractable, dans le cas présent un élément aérodynamique mobile.

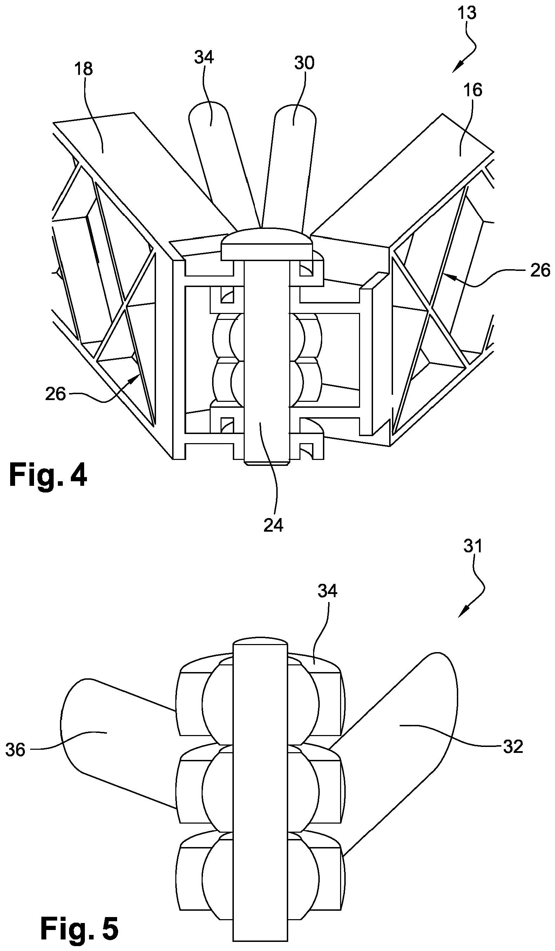

Selon un premier mode de réalisation du mécanisme articulé 10 représenté à la figure 2, ce mécanisme comprend un ensemble de bras et un ensemble de bielles. Les bras relient l'élément mobile au corps principal et les bielles relient les bras entre eux. Le mécanisme articulé de ce premier mode comporte deux bras articulés 12 et 14 comprenant chacun deux portions, rectilignes dans l'exemple illustré, les portions 16 et 18 pour le bras articulé 12 et des portions 20 et 22 pour le bras articulé 14. Les portions 16 et 18 d'une part et 20 et 22 d'autre part sont reliées entre elles par une de leurs extrémités au niveau d'une articulation commune, respectivement 13 et 15 (sur la figure 2), comme représenté à la figure 4. Cette figure représente une des configurations possibles d'un mécanisme articulé générant un déplacement rectiligne, le nombre de bielles et de bras ainsi que leurs dimensions pouvant varier. Il s'agit ici d'une liaison de type pivot réalisée par un axe 24 reliant ici les portions 16 et 18 du bras articulé 12 (il peut en être de même au niveau du bras 14). Mais il est envisageable d'utiliser un autre type de liaison adapté au fonctionnement du mécanisme articulé 10. Plus généralement, ces choix relèvent de l'homme du métier en fonction des contraintes subies par le mécanisme. Par exemple, des liaisons de type rotule avec un faible débattement angulaire perpendiculairement à l'axe de pivot, présentent l'avantage de donner au mécanisme la possibilité d'accepter une légère déformation selon une direction perpendiculaire au plan de déploiement des bras 12 et 14 à cause du phénomène d'arc-boutement. Il s'agit ici de permettre un léger débattement angulaire hors du plan de déploiement des bras 12 et 14. Comme illustré à la figure 5, un empilement des liaisons rotules permet de brider la capacité de débattement de ces dernières.

Dans l'exemple illustré, les deux bras 12 et 14 se déploient et se rétractent dans une direction parallèle à l'axe longitudinal X du véhicule 2.

Les bras 12 et 14 comprennent des nervures 26 visibles sur les figures 1, 2 et 4 ayant pour but de rigidifier ces derniers qui subissent des contraintes en position déployée. Également dans une optique de robustesse, les bras 12 et 14 sont d'une épaisseur adaptée aux contraintes s'exerçant sur eux.

Les bras 12 et 14 ont chacun une extrémité, respectivement 17 et 21, reliée au corps principal 6 du becquet 4 et une extrémité, respectivement 19 et 23, reliée à la lame aérodynamique mobile 8. Les extrémités 17 et 21 des portions 16 et 20 sont reliées à la partie fixe du becquet et les extrémités 19 et 23 des portions 18 et 22 sont reliées à la lame aérodynamique mobile 8. Ces liaisons laissent au moins un degré de liberté en rotation des bras articulés 12 et 14 autour d'un axe perpendiculaire au plan de déploiement rectiligne de la lame aérodynamique mobile 8. Dans le cas de liaisons de type rotule les liaisons permettent un léger débattement angulaire hors du plan de déploiement de la lame aérodynamique mobile 8 comme expliqué auparavant.

Le mécanisme comprend dans l'exemple illustré à la figure 2 un actionneur 28 situé sur le corps principal 6 du becquet 4. Il peut être fixé par collage, vissage ou toute autre méthode traditionnellement utilisée. L'axe de sortie de cet actionneur 28 est ici bloqué en rotation avec l'articulation 17 de la portion 16 reliée au corps principal 6 du becquet 4. Il s'agit dans cet exemple d'un moteur à rotation, il pourra s'agir d'autres types d'actionneurs comme nous le verrons par la suite.

Cet actionneur 28 pourrait être placé au niveau du bras articulé 14, plus précisément au niveau de l'extrémité 15 de la portion 20 reliée au corps principal 6 du becquet mais également au niveau d'une quelconque des autres articulations des bras 12 et 14 ou encore au niveau des bielles que nous allons évoquer par la suite. Il s'agit dans l'exemple illustré d'un moteur à rotation. Nous verrons par la suite qu'il peut s'agir d'autres types d'actionneur. L'actionneur est alimenté par une source d'énergie conventionnelle du véhicule 2.

L'actionneur 28 permet dans l'exemple illustré de réaliser une rotation de la portion 16 du bras 12 selon un angle défini ce qui va permettre le déploiement de la lame aérodynamique mobile 8.

Le mécanisme articulé 10 comprend également quatre bielles 30, 32, 34 et 36, comme illustré à la figure 2. La bielle 30 relie les bras articulés 12 et 14 au niveau des liaisons 13 entre les portions 16 et 18 d'une part et 15 entre les portions 20 et 22 d'autre part. Les trois autres bielles 32, 34, 36 ont une extrémité reliée à une articulation commune 31, comme illustré à la figure 2. La bielle 32 relie les articulations 21 et 31. La bielle 34 relie les articulations 13 et 31. La bielle 36 est liée au niveau de la lame aérodynamique mobile 8 par une articulation 37. Les liaisons articulées des bielles peuvent être de type pivot mais de préférence ici de type rotule, comme représenté à la figure 4.

Ces bielles ont pour but de permettre un déploiement rectiligne sans perturbations de la lame aérodynamique mobile 8. Plus précisément, le mécanisme articulé 10 fait apparaître deux parallélogrammes. Un premier parallélogramme est constitué des portions 16 et 20, de la bielle 30 et de la portion du corps principal 6 comprise entre les points de fixation des portions 16 et 20 à ce corps principal 6. Ce parallélogramme sera nommé par la suite parallélogramme n°1 et a donc pour sommets les articulations 17, 13, 15, 21. Un second parallélogramme est constitué des portions 18 et 22, de la bielle 30 et d'un segment non représenté compris entre les points de fixation des portions 18 et 22 à la lame aérodynamique mobile 8. Ce parallélogramme sera nommé par la suite parallélogramme n°2 et a donc pour sommets les articulations 15, 13, 19, 23.

Dans ces deux parallélogrammes
- les groupes de côtés suivants ont la même longueur entre eux
   - [17-21], [13-15] et [37-23]
   - [17-13] et [21-15]
   - [15-23] et [13-19], [17-13] et [21-15] pouvant être égaux à [15-23] et [13-19]
- les côtés [17-21], [13-15] et [19-23] sont maintenus parallèles entre eux par l'action des bielles, qui sera détaillé ci-dessous.

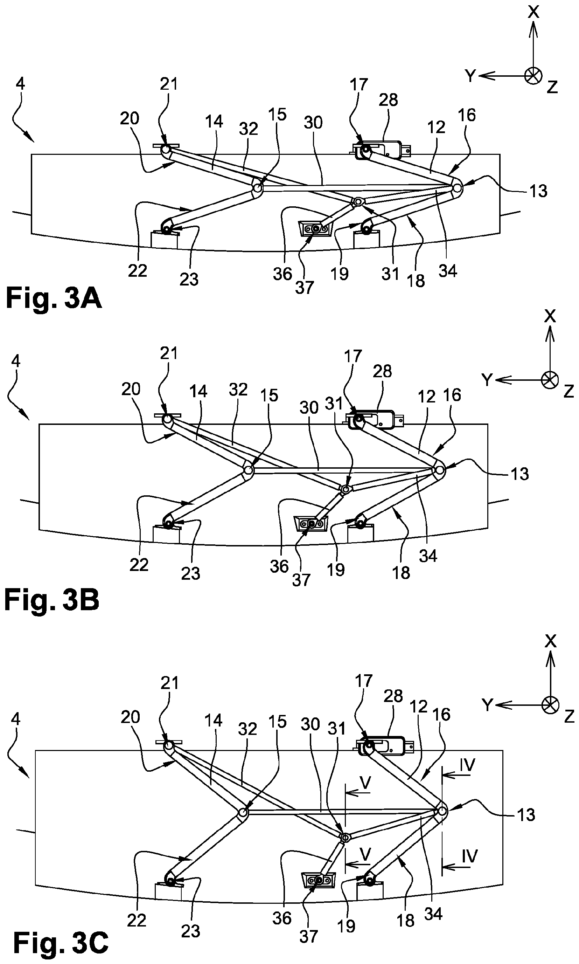

Les bielles permettent de transmettre la déformation subie par le parallélogramme n°1 au parallélogramme n°2 afin que ce dernier se déforme de la même manière que le parallélogramme n°1. Les bielles permettent donc au parallélogramme n°2 de subir une déformation identique à celle parallélogramme n°1. Cela est visible sur les figures 3A à 3C, la figure 3C illustrant le mécanisme articulé à un niveau de déploiement le plus important, la figure 3A illustrant le mécanisme articulé à un niveau de déploiement le moins important et la figure 3B illustrant un état intermédiaire entre ceux des figures 3A et 3C. Afin de permettre cette déformation, différents rapports géométriques sont observés. Ainsi, les longueurs des portions 16, 18, 20 et 22 ainsi que celle de la bielle 34 sont identiques. Par ailleurs, les longueurs des bielles 30 et 32 sont identiques et égales au double des longueurs des portions 16, 18, 20 et 22 ainsi que celle de la bielle 34. Ces rapports permettent de contrôler l'aspect rectiligne du déploiement et de la rétraction de la lame aérodynamique mobile 8.

Sur l'exemple représenté aux figures 3A à 3C, le mode de fonctionnement est le suivant. L'actionneur 28 met en rotation la portion 16 du bras 12. Ce mouvement entraîne la portion 18 de ce même bras articulé 12 mais également les deux portions 20 et 22 du bras articulé 14 grâce à la bielle 30 reliant les deux bras articulés 12 et 14. Les bras articulés 12 et 14 sont donc montés pivotant au niveau des articulations 17 et 21, mais aussi au niveau des articulations 19 et 23.

Lors du déploiement des deux bras articulés 12 et 14, la bielle 32 pivote autour de son point de liaison au niveau de l'articulation 21. La bielle 34 est quant à elle poussée par le bras articulé 12 en déploiement du fait de sa liaison avec le bras 12 au niveau de l'articulation 13. La bielle 36 est alors redressée afin d'augmenter la valeur de l'angle formé par les bielles 32 et 36. L'ensemble de ces mouvements permettent de passer de l'état de la figure 3A à celui de la figure 3C en passant par l'état de la figure 3B. Les deux parallélogrammes se repoussent l'un l'autre de manière synchronisée ce qui permet de créer un mouvement rectiligne en maintenant le parallélisme entre le corps principal 6 du becquet 4 et la lame aérodynamique mobile 8. Plus généralement, il s'agit d'un mécanisme dit « translateur de Kempe ».

La rétraction de la lame aérodynamique mobile 8 est impulsée par l'actionneur 28 qui permet à la portion 16 du bras articulé 12 de réaliser un mouvement opposé à celui réalisé lors du déploiement. C'est alors tout le mécanisme articulé 10 qui réalise un mouvement opposé à celui du déploiement afin de permettre la rétraction de la lame aérodynamique mobile 8.

L'intégralité des rapports de longueurs énoncés ci-dessus sont issus d'une modélisation d'une théorie. Ces rapports peuvent, dans le cadre d'une industrialisation, varier légèrement, les longueurs identiques étant sensiblement identiques, une longueur étant sensiblement le double d'une autre, etc.

Il est à noter que les bras articulés 12 et 14 et les bielles 30, 32, 34 et 36 se déplacent chacun dans des plans sensiblement parallèles et proches les uns des autres. Cela permet un guidage de meilleure qualité.

Les matériaux utilisés pour la fabrication du dispositif exposé ci-dessous résultent des choix de l'homme du métier en fonction de la nature de la partie mobile ou encore du nombre de cycles prévus. Il pourra s'agir de matériaux plastique ou encore métallique. De manière générale, les bras articulés 12 et 14 subissent les efforts principaux dus au poids de lame déployée en porte-à-faux et aux pressions aérodynamiques alors que les bielles 30, 32, 34 et 36 permettent surtout la coordination des différents mouvements.

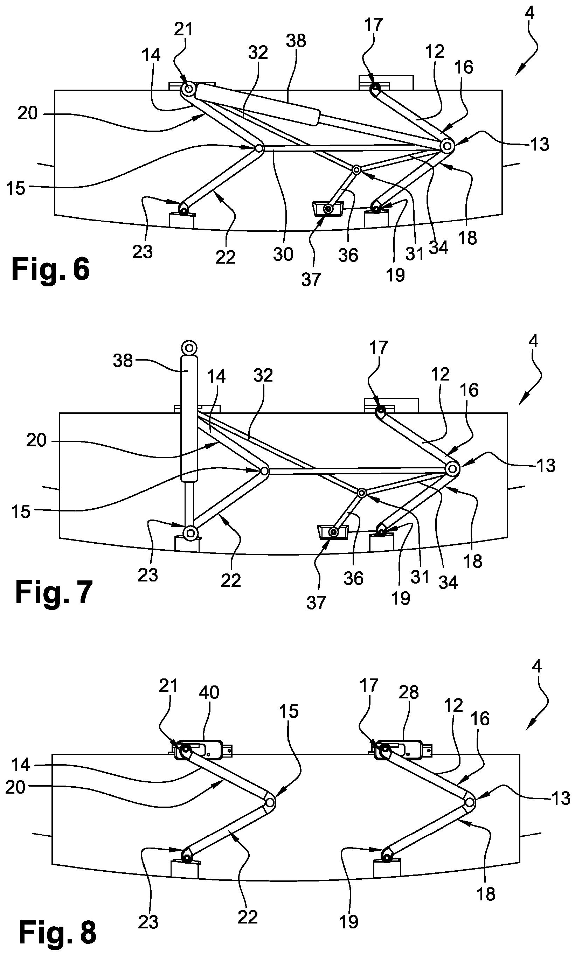

Les figures 6 et 7 représentent un deuxième mode de réalisation en variante du premier par le type d'actionneur utilisé. Les éléments identiques à ceux décrits précédemment sont identifiés par les mêmes références numériques.

Dans ce deuxième mode, l'actionneur 28 du premier mode, qui est un moteur à sortie directe en couple et angle, est remplacé par un vérin 38, exerçant une force et un déplacement, lié d'une part au niveau du point de liaison de la portion 20 au corps principal 6 du becquet 4 et d'autre part au niveau de l'articulation 13. Ces deux liaisons laissent au moins un degré de liberté en rotation du vérin 38. Lors du déploiement, le vérin 38 permet de mettre en mouvement le bras articulé 12. L'ensemble de la cinématique de déploiement et de rétraction est identique à celle exposée dans le premier mode de réalisation de l'invention.

Sur la variante de la figure 7, le vérin 38 est disposé au niveau du bras articulé 14 en s'étendant du corps principal 6 à la lame aérodynamique mobile 8 (plus précisément de l'articulation 21 à l'articulation 23) dans une direction parallèle à l'axe longitudinal X. L'actionnement du vérin 38 permet de de mettre en mouvement le bras articulé 14. L'ensemble de la cinématique de déploiement et de rétraction est identique à celle exposée ci-dessus.

Bien évidemment, et comme cela a été expliqué pour l'actionneur 28, le vérin 38 peut être placé à d'autres emplacements que ceux illustrés aux figures 6 et 7, le but étant de mettre en mouvement un des bras articulés 12 ou 14, directement ou indirectement (par mise en mouvement du système de bielles par exemple dans le cas où le vérin serait relié aux bielles) afin de permettre le déploiement puis la rétraction de la lame aérodynamique mobile 8.

La figure 8 représente un troisième mode de réalisation de l'invention. Les éléments identiques à ceux décrits précédemment sont identifiés par les mêmes références numériques.

Dans ce mode de réalisation, le mécanisme articulé est dépourvu de bielles. Les deux bras sont mis en mouvement de manière simultanée par l'intermédiaire de deux actionneurs. Il s'agit sur la figure 8 de deux actionneurs 28 et 40, l'actionneur 40 étant situé sur le corps principal 6 du becquet 4. L'axe de sortie de cet actionneur 40 est ici bloqué en rotation avec l'articulation 21 de la portion 20 reliée au corps principal 6 du becquet 4. Les actionneurs 28 et 40 sont dans l'exemple illustré des moteurs en sortie directe en couple et angle mais peuvent être remplacés par tout type d'actionneur adapté.

La synchronisation des actionneurs permet d'assurer un déploiement et une rétraction rectiligne. Cela permet d'envisager de placer le mécanisme articulé au niveau de zone ou l'espace disponible entre les bras articulés 12 et 14 est restreint.

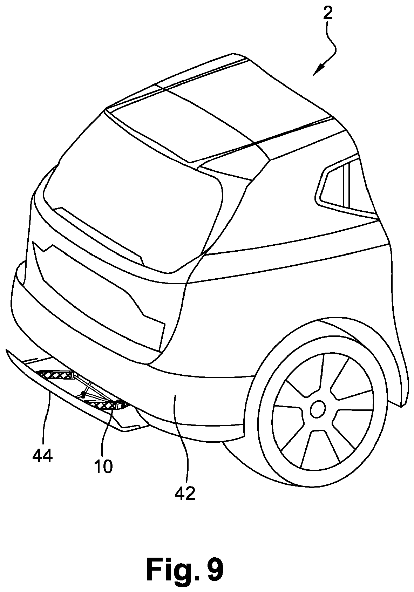

Comme illustré sur la figure 9, il est envisageable d'adapter le mécanisme articulé, qu'il s'agisse de celui selon le premier mode de réalisation ou selon le second mode de réalisation à une pièce automobile autre qu'un becquet. Il s'agit par exemple d'un diffuseur arrière 44 monté en partie basse 42 à l'arrière du véhicule 2 et ayant le même objectif que la lame aérodynamique mobile 8.

L'invention n'est pas limitée aux modes de réalisation présentés et d'autres modes de réalisation apparaîtront clairement à l'homme du métier.

Il est notamment possible de faire varier le nombre d'actionneurs afin d'en avoir plus que deux. On peut par exemple en placer un au niveau de chaque liaison des deux bras articulés 12 et 14.

Il est également possible de faire varier le positionnement du ou des actionneurs en les plaçant au niveau du dispositif de bielles ou encore au niveau de l'élément mobile.

Il est également possible que les différentes portions constituant le mécanisme articulé ne soient pas rectilignes mais par exemple courbées.

### Nomenclature

2 : véhicule automobile
4 : becquet
6 : corps principal du becquet
8 : lame aérodynamique mobile
10 : premier mécanisme articulé
12 : premier bras articulé
14 : second bras articulé
16, 18 : portions du premier bras articulé
20, 22 : portions du second bras articulé
13, 15, 17, 19, 21, 23 : articulations
24 : axe de liaison
26 : nervures
28 : premier actionneur
30, 32, 34, 36 : bielles
31 : articulation commune
37 : articulation de la bielle 36
38 : vérin
40 : second actionneur
42 : pare-chocs arrière
44 : diffuseur arrière

## Revendications

1. Pièce de carrosserie de véhicule automobile (4 ; 42) comprenant
- un corps principal (6), et
- un élément aérodynamique mobile (8 ; 44) apte à occuper une position rétractée et une position déployée par rapport au corps principal (6),
la pièce de carrosserie (4 ; 42) comprenant un mécanisme articulé (10) apte à permettre un déploiement rectiligne de l'élément aérodynamique (8 ; 44), le mécanisme articulé (10) comprenant deux bras articulés (12, 14) comprenant chacun deux portions (16, 18, 20, 22), une portion (16, 20) reliée au corps principal (6) et une portion reliée à l'élément aérodynamique mobile (8 ; 44), **caractérisée en ce que** les bras articulés (12, 14) sont aptes à se déployer dans une direction parallèle à un axe longitudinal du véhicule (2).

2. Pièce de carrosserie (4 ; 42) selon la revendication 1, dans laquelle le mécanisme articulé comprend au moins un actionneur (28, 38, 40) apte à permettre le déploiement et la rétraction des bras articulés (12, 14).

3. Pièce de carrosserie (4 ; 42) selon la revendication précédente, dans laquelle le mécanisme articulé comprend un actionneur (28, 38) bloqué en rotation avec un des bras articulés (12, 14).

4. Pièce de carrosserie (4 ; 42) selon l'une quelconque des revendications précédentes, dans laquelle le mécanisme articulé comprend des bielles (30, 32, 34, 36) aptes à permettre une synchronisation des mouvements des bras articulés (12, 14).

5. Pièce de carrosserie (4 ; 42) selon la revendication précédente, dans laquelle une bielle (30) est apte à relier directement les deux bras articulés entre eux.

6. Pièce de carrosserie (4 ; 42) selon l'une quelconque des revendications 4 et 5, dans laquelle un ensemble de trois bielles (32, 34, 36), partageant une articulation (31) commune, est apte à relier les bras articulés (12, 14) à l'élément aérodynamique mobile (8 ; 44).

7. Pièce de carrosserie (4 ; 42) selon l'une quelconque des revendications 4 à 6, dans laquelle les bielles (30, 32, 34, 36) sont reliées entre elles et/ou aux bras articulés (12, 14) par des liaisons rotule.

8. Pièce de carrosserie (4 ; 42) selon la revendication 2, dans laquelle le mécanisme articulé comprend deux actionneurs (28, 40), chaque actionneur (28, 40) étant relié à un bras articulé (12, 14) ou à une bielle (30, 32, 34, 36).

9. Pièce de carrosserie (4 ; 42) selon l'une quelconque des revendications 2 à 8, dans laquelle l'actionneur (28, 38, 40) est choisi parmi un moteur à sortie directe en couple et angle ou un vérin.

10. Pièce de carrosserie (42) selon l'une quelconque des revendications précédentes, la pièce (42) étant un pare-chocs arrière et l'élément aérodynamique mobile (8 ; 40) étant un diffuseur arrière.

11. Pièce de carrosserie (4) selon l'une quelconque des revendications 1 à 9, la pièce (4) étant un becquet de toit ou de hayon et l'élément aérodynamique mobile étant une lame aérodynamique mobile (8).

12. Véhicule automobile (2) comprenant une pièce de carrosserie (4 ; 42) selon l'une quelconque des revendications précédentes.

## Patentansprüche

1. Kraftfahrzeug-Karosserieteil (4; 42), aufweisend
- einen Hauptkörper (6), und
- ein bewegliches aerodynamisches Element (8; 44), das ausgestaltet ist, in Bezug auf den Hauptkörper (6) eine eingefahrene Position und eine ausgefahrene Position einzunehmen,
das Karosserieteil (4; 42) einen Gelenkmechanismus (10) aufweist, der ausgestaltet ist, eine geradlinige Entfaltung des aerodynamischen Elements (8; 44) zu ermöglichen, wobei der Gelenkmechanismus (10) zwei Gelenkarme (12, 14) aufweist, die jeweils zwei Abschnitte (16, 18, 20, 22) aufweisen, wobei ein Abschnitt (16, 20) mit dem Hauptkörper (6) verbunden ist und ein Abschnitt mit dem beweglichen aerodynamischen Element (8; 4) verbunden ist: **dadurch gekennzeichnet, dass** die Gelenkarme (12, 14) ausgestaltet sind, sich in einer Richtung parallel zu einer Längsachse des Fahrzeugs (2) auszudehnen.

2. Karosserieteil (4; 42) nach Anspruch 1, wobei der Gelenkmechanismus mindestens ein Stellglied (28, 38, 40) aufweist, das ausgestaltet ist, das Ausfahren und Einfahren der Gelenkarme (12, 14) zu ermöglichen.

3. Karosserieteil (4; 42) nach dem vorhergehenden Anspruch, wobei der Gelenkmechanismus ein Stellglied (28, 38) aufweist, der drehfest mit einem der Gelenkarme (12, 14) verbunden ist.

4. Karosserieteil (4; 42) nach einem der vorhergehenden Ansprüche, wobei der Gelenkmechanismus Pleuelstangen (30, 32, 34, 36) aufweist, die ausgestaltet sind, eine Synchronisation der Bewegungen der Gelenkarme (12, 14) zu ermöglichen.

5. Karosserieteil (4; 42) nach dem vorhergehenden Anspruch, wobei eine Pleuelstange (30) ausgestaltet ist, die beiden Gelenkarme direkt miteinander zu verbinden.

6. Karosserieteil (4; 42) nach einem der Ansprüche 4 oder 5, bei dem ein Satz von drei Pleuelstangen (32, 34, 36), die sich ein gemeinsames Gelenk (31) teilen, ausgestaltet ist, die Gelenkarme (12, 14) mit dem beweglichen aerodynamischen Element (8; 44) zu verbinden.

7. Karosserieteil (4; 42) nach einem der Ansprüche 4 bis 6, wobei die Pleuelstangen (30, 32, 34, 36) untereinander und/oder mit den Gelenkarmen (12, 14) über Kugelgelenkverbindungen verbunden sind.

8. Karosserieteil (4; 42) nach Anspruch 2, wobei der Gelenkmechanismus zwei Stellglieder (28, 40) aufweist, wobei jedes Stellglied (28, 40) mit einem Gelenkarm (12, 14) oder einer Pleuelstange (30, 32, 34, 36) verbunden ist.

9. Karosserieteil (4; 42) nach einem der Ansprüche 2 bis 8, wobei der Aktuator (28, 38, 40) aus einem Motor mit direkter Drehmoment- und Winkelabgabe oder einem Zylinder ausgewählt ist.

10. Karosserieteil (42) nach einem der vorhergehenden Ansprüche, wobei das Teil (42) ein hinterer Stoßfänger ist und das bewegliche aerodynamische Element (8; 44) ein Heckdiffusor ist.

11. Karosserieteil (4) nach einem der Ansprüche 1 bis 9, wobei das Teil (4) ein Dach-oder Heckklappenspoiler ist und das bewegliche aerodynamische Element ein bewegliches aerodynamisches Blatt (8) ist.

12. Kraftfahrzeug (2) aufweisend ein Karosserieteil (4; 42) nach einem der vorhergehenden Ansprüche.

## Claims

1. Motor vehicle bodywork part (4; 42) comprising:
- a main body (6), and
- a movable aerodynamic element (8; 44) capable of occupying a retracted position and a deployed position in relation to the main body (6),
the body part (4; 42) comprising an articulated mechanism (10) capable of accommodating a straight deployment of the aerodynamic element (8; 44), the articulated mechanism (10) comprising two articulated arms (12, 14), each comprising two portions (16, 18, 20, 22), a portion (16, 20) connected to the main body (6) and a portion connected to the movable aerodynamic element (8; 44), **characterized in that** the articulated arms (12, 14) are capable of deploying in a direction parallel to a longitudinal axis of the vehicle (2).

2. Bodywork part (4; 42) according to claim 1, wherein the articulated mechanism comprises at least one actuator (28, 38, 40) capable of allowing the deployment and retraction of the articulated arms (12, 14).

3. Bodywork part (4; 42) according to the preceding claim, wherein the articulated mechanism comprises an actuator (28, 38) locked in rotation with one of the articulated arms (12, 14).

4. Bodywork part (4; 42) according to any one of the preceding claims, wherein the articulated mechanism comprises connecting rods (30, 32, 34, 36) capable of allowing synchronization of the movements of the articulated arms (12, 14).

5. Bodywork part (4; 42) according to the preceding claim, wherein a connecting rod (30) is capable of directly connecting the two articulated arms.

6. Bodywork part (4; 42) according to any one of claims 4 and 5, wherein a set of three connecting rods (32, 34, 36), sharing a common articulation (31), is capable of connecting the articulated arms (12, 14) to the movable aerodynamic element (8; 44).

7. Bodywork part (4; 42) according to any one of claims 4 to 6, in which the connecting rods (30, 32, 34, 36) are connected to each other and/or to the articulated arms (12, 14) by ball joint links.

8. Bodywork part (4; 42) according to claim 2, wherein the articulated mechanism comprises two actuators (28, 40), each actuator (28, 40) being connected to an articulated arm (12, 14) or to a connecting rod (30, 32, 34, 36).

9. Bodywork part (4; 42) according to any one of claims 2 to 8, wherein the actuator (28, 38, 40) is selected from a motor with direct output in torque and angle or a cylinder.

10. Bodywork part (42) according to any one of the preceding claims, the part (42) being a rear bumper and the movable aerodynamic element (8; 40) being a rear diffuser.

11. Bodywork part (4) according to any one of claims 1 to 9, the part (4) being a roof or tailgate spoiler and the movable aerodynamic element being a movable aerodynamic blade (8).

12. Motor vehicle (2) comprising a bodywork part (4; 42) according to any of the preceding claims.
